# EUROPEAN PATENT APPLICATION

(11) **EP 4 210 402 A1**
(43) Date of publication of application: **12.07.2023**
(21) Application number: 21863416.0
(22) Date of filing: 27.07.2021
(51) Int. Cl.: H04W 56/00

(54) **DATA COMMUNICATION METHOD AND RELATED APPARATUS**

(30) Priority: 02.09.2020 CN 202010910729
(71) Applicant: GUANGDONG OPPO MOBILE TELECOMMUNICATIONS CORP., LTD., Dongguan, Guangdong 523860 (CN)
(72) Inventor: LIU, Jun, Dongguan, Guangdong 523860 (CN)
(74) Representative: Mewburn Ellis LLP
(86) International application number: PCT/CN2021/108707
(87) International publication number: WO 2022/048348

(57) **Abstract**

The disclosure provides a method for data communication and related apparatuses. User equipment (UE) transmits a first session management message configured with a procedure transaction identity (PTI) to a network device. The UE receives a second session management message from the network device, starts a first timer and a counter, and transmits a third session management message to the network device, where the second session management message and the third session management message each carry the PTI. The UE performs a first preset operation according to at least one of a first message-receiving-state within a duration of the first timer and the number of starts counted by the counter, where the first preset operation is used to release the PTI, and the duration of the first timer is set according to a time interval at which the UE receives the second session management message. In this way, the time length in which the PTI is occupied can be greatly reduced while ensuring the synchronization between the UE and the network device during the session as much as possible.

## Description

### CROSS-REFERENCE TO RELATED APPLICATION(S)

This application claims priority to Chinese Patent Application No. 202010910729.8 filed September 2, 2020, and entitled "Method for Data Communication and Related Apparatus", the entire disclosure of which is hereby incorporated by reference.

### TECHNICAL FIELD

The disclosure relates to the field of communication technology, and in particular, to a method for data communication and related apparatuses.

### BACKGROUND

In wireless communication, for each session management procedure initiated by user equipment (UE), a valid procedure transaction identity (PTI) needs to be assigned to the session management procedure. Generally, the UE initiates a session request, and can release the PTI upon receiving a feedback message from the network device in response to the session request.

In some cases, if the network device fails to receive a response message transmitted by the UE in response to the feedback message, the network device will retransmit the feedback message to the UE. However, at this time, the UE has released the PTI and thus cannot recognize the PTI carried in the feedback message, which results in communication failure.

### SUMMARY

Based on the above problems, the disclosure proposes a method for data communication and related apparatuses, with which the time length in which the procedure transaction identity (PTI) is occupied can be greatly reduced while ensuring the synchronization between the user equipment (UE) and the network device during the session as much as possible.

In a first aspect, implementations of the disclosure provide a method for data communication. The method includes the following. A UE transmits a first session management message configured with a PTI to a network device. The UE receives a second session management message from the network device, starts a first timer and a counter, and transmits a third session management message to the network device, where the second session management message and the third session management message each carry the PTI, and the counter is used to count the number of starts of the first timer. The UE performs a first preset operation according to at least one of a first message-receiving-state within a duration of the first timer and the number of starts counted by the counter, where the first message-receiving-state includes receiving the second session management message again and not receiving the second session management message again, the first preset operation is used to release the PTI, and the duration of the first timer is set according to a time interval at which the UE receives the second session management message.

In a second aspect, implementations of the disclosure provide a method for data communication. The method includes the following. A network device receives a first session management message from a UE, where the first session management message carries a PTI. The network device transmits a second session management message to the UE, and starts a second timer, where the second session management message carries the PTI. The network device performs a second preset operation according to a second message-receiving-state within a duration of the second timer, where the second preset operation is used to terminate a session, the second message-receiving-state includes receiving a third session management message from the UE and not receiving the third session management message from the UE, and the third session management message carries the PTI.

In a third aspect, implementations of the disclosure provide an apparatus for data communication. The apparatus is applied to a UE and includes a processing unit and a communication unit. The processing unit is configured to: transmit, with the communication unit, a first session management message configured with a PTI to a network device, receive, with the communication unit, a second session management message from the network device, start a first timer and a counter, and transmit a third session management message to the network device, where the second session management message and the third session management message each carry the PTI, and the counter is used to count the number of starts of the first timer, and perform a first preset operation according to at least one of a first message-receiving-state within a duration of the first timer and the number of starts counted by the counter, where the first message-receiving-state includes receiving the second session management message again and not receiving the second session management message again, the first preset operation is used to release the PTI, and the duration of the first timer is set according to a time interval at which the UE receives the second session management message.

In a fourth aspect, implementations of the disclosure provide an apparatus for data communication. The apparatus is applied to a network device and includes a processing unit and a communication unit. The processing unit is configured to: receive, with the communication unit, a first session management message from a UE, where the first session management message carries a PTI, transmit, with the communication unit, a second session management message to the UE, and start a second timer, where the second session management message carries the PTI, and perform a second preset operation according to a second message-receiving-state within a duration of the second timer, where the second preset operation is used to terminate a session, the second message-receiving-state includes receiving a third session management message from the UE and not receiving the third session management message from the UE, and the third session management message carries the PTI.

In a fifth aspect, implementations of the disclosure provide a UE. The UE includes an application processor and a memory configured to store one or more programs. The one or more programs are configured to be executed by the application processor and include instructions configured to perform the steps in any method of the first aspect of implementations of the disclosure.

In a sixth aspect, implementations of the disclosure provide a network device. The network device includes an application processor and a memory configured to store one or more programs. The one or more programs are configured to be executed by the application processor and include instructions configured to perform the steps in any method of the second aspect of implementations of the disclosure.

In a seventh aspect, implementations of the disclosure provide a computer storage medium. The computer storage medium stores computer programs. The computer program includes program instructions which when executed by a processor, cause the processor to perform the method of any of the first aspect and the second aspect of implementations of the disclosure.

In an eighth aspect, implementations of the disclosure provide a computer product. The computer program product includes a non-transitory computer-readable storage medium storing computer programs. The computer programs are operable with a computer to perform some or all of the steps in any method of the first aspect or the second aspect of implementations of the disclosure. The computer program product may be a software installation package.

As can be seen, in the method for data communication and related apparatuses above, the UE transmits the first session management message configured with the PTI to the network device. Then, the UE receives the second session management message from the network device, starts the first timer and the counter, and transmits the third session management message to the network device, where the second session management message and the third session management message each carry the PTI, and the counter is used to count the number of starts of the first timer. Finally, the UE performs the first preset operation according to at least one of the first message-receiving-state within the duration of the first timer and the number of starts counted by the counter, where the first message-receiving-state includes receiving the second session management message again and not receiving the second session management message again, the first preset operation is used to release the PTI, and the duration of the first timer is set according to the time interval at which the UE receives the second session management message. In this way, the time length in which the PTI is occupied can be greatly reduced while ensuring the synchronization between the UE and the network device during the session as much as possible.

### BRIEF DESCRIPTION OF THE DRAWINGS

To describe technical solutions of implementations of the disclosure or the related art more clearly, the following briefly introduces the drawings required for description of implementations or the related art. Apparently, the drawings in the following description are merely some implementations of the disclosure. Those of ordinary skill in the art may also obtain other drawings based on these drawings without creative efforts.
FIG. 1 is a schematic structural diagram of a communication system provided in implementations of the disclosure.
FIG. 2 is a schematic flowchart of a method for data communication provided in implementations of the disclosure.
FIG. 3 is a schematic flowchart of another method for data communication provided in implementations of the disclosure.
FIG. 4 is a schematic flowchart of another method for data communication provided in implementations of the disclosure.
FIG. 5 is a schematic flowchart of another method for data communication provided in implementations of the disclosure.
FIG. 6 is a block diagram of functional units of an apparatus for data communication provided in implementations of the disclosure.
FIG. 7 is a block diagram of functional units of another apparatus for data communication provided in implementations of the disclosure.
FIG. 8 is a schematic structural diagram of user equipment (UE) provided in implementations of the disclosure.
FIG. 9 is a schematic structural diagram of a network device provided in implementations of the disclosure.

### DETAILED DESCRIPTION

In order to enable those skilled in the art to better understand solutions of the disclosure, technical solutions in implementations of the disclosure will be described clearly and completely hereinafter with reference to the accompanying drawings in the implementations of the disclosure. Apparently, the described implementations are merely some rather than all implementations of the disclosure. All other implementations obtained by those of ordinary skill in the art based on the implementations of the disclosure without creative efforts shall fall within the protection scope of the disclosure.

The terms "first", "second", and the like used in the specification, the claims, and the accompany drawings of the disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units, on the contrary, but can optionally include other steps or units that are not listed, alternatively, other steps or units inherent to the process, method, product, or device can be included either.

The term "implementation" referred to herein means that a particular feature, structure, or feature described in conjunction with the implementation may be contained in at least one implementation of the disclosure. The phrase appearing in various places in the specification does not necessarily refer to the same implementation, nor does it refer to an independent or alternative implementation that is mutually exclusive with other implementations. It is expressly and implicitly understood by those skilled in the art that an implementation described herein may be combined with other implementations.

The technical solutions in implementations of the disclosure will be described below with reference to the accompanying drawings.

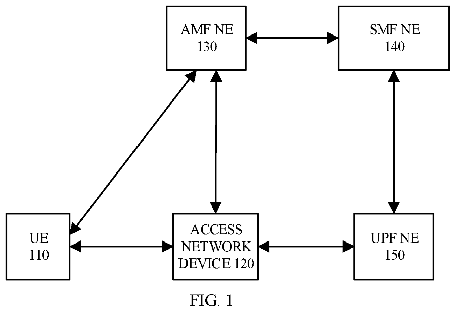

The technical solutions of implementations of the disclosure are applicable to a wireless communication system. The wireless communication system may include a non-terrestrial network (NTN) system, a long term evolution (LTE) system, an LTE frequency division duplex (FDD) system, an LTE time division duplex (TDD) system, a 5th generation (5G) new radio (NR) communication system, or a future evolved communication system. For example, referring to FIG. 1, the wireless communication system is a 5G NR communication system.

In FIG. 1, an example communication system 100 includes user equipment (UE) 110, an access network device 120, an access and mobility management function (AMF) network element (NE) 130, a session management function (SMF) NE 140, and a user plane function (UPF) NE 150. The AMF NE 130, the SMF NE 140, and the UPF NE 150 are core network NEs (or referred to as network function NE). It should be noted that, other NEs in the core network NEs are also included in implementations of the disclosure, which is not limited herein. In addition, the connection between NEs may be a wireless connection or a wired connection. For convenient and intuitive illustration of the connection between NEs, the connection is illustrated in FIG. 1 with solid lines. Interfaces between NEs have been described in detail in the related art, which will not be repeated herein.

Specifically, the UE 110 in implementations of the disclosure may include a UE, a user terminal, a handheld terminal, a laptop, a subscriber unit, a cellular phone, a smart phone, a wireless data card, a personal digital assistant (PDA) computer, and may also include a vehicle-mounted device, a vehicle-mounted terminal, a vehicle device, an automobile device, etc. The UE 110 may also be a cellular phone, a cordless phone, a session initiation protocol (SIP) phone, a wireless local loop (WLL) station, a personal digital assistant (PDA), a handheld device with wireless communication capabilities, a computing device, or other processing devices connected to a wireless modem, a relay device, a wearable device, a terminal device in the 5G NR system, or a terminal device in a future evolved public land mobile network (PLMN), which is not limited herein.

In implementations of the disclosure, the UE 110 includes a hardware layer, an operating system layer running on the hardware layer, and an application layer running on the operating system layer. The hardware layer includes hardware such as a central processing unit (CPU), a memory management unit (MMU), and memory (also referred to as main storage). The operating system may be any one or more computer operating systems that implement service processing through processes, such as a Linux^{™} operating system, a Unix^{™} operating system, an Android^{™} operating system, an iOS^{™} operating system, or a Windows^{™} operating system. The application layer includes applications such as browsers, contacts, word processing software, and instant messaging software. In addition, in implementations of the disclosure, a specific structure of a party executing the method provided in implementations of the disclosure is not particularly restricted, as long as it can communicate through the method according to implementations of the disclosure by running programs that record the codes of the method provided in implementations of the disclosure. For example, the party executing the method provided in implementations of the disclosure may be the UE 110 or a functional module in the UE 110 capable of invoking and executing the programs.

Specifically, the access network device 120 can be regarded as a radio access network (RAN) device or an access network (AN) device, which is mainly responsible for radio resource management and quality of service (QoS) management on air interface side, data compression and encryption, etc. The access network device 120 may include base stations in various forms, such as a macro base station, a micro base station, a relay station, an access point (AP), etc. In communication systems employing different radio access technologies, devices with base station functions may have different names. For example, in the 5G communication system, such devices are referred to as next generation NodeB (gNB) or next generation evolved NodeB (ng-eNB). In the LTE system, such devices are referred to as evolved NodeB (eNB or eNodeB). In a 3rd generation (3G) system, such devices are referred to as NodeB.

Specifically, the AMF NE 130 is distributed in the core network and is mainly responsible for signaling processing. The AMF NE 130 can also provide control plane functions, such as access control, mobility management, attachment and detachment, and gateway selection. In addition, when the AMF NE 130 serves a session in the UE 110, the AMF NE will provide the session with control-plane storage resources to store a session identity (ID) and a SMF NE ID associated with the session ID.

Specifically, the SMF NE 140 may be responsible for user-plane NE selection, user-plane NE redirection, internet protocol (IP) address assignment, bearer establishment, modification, and release, and QoS control.

Specifically, the UPF NE 150 may be responsible for forwarding and receiving user data in the UE 110. For example, the UPF NE 150 receives user data from the data network and transmits the user data to the UE 110 via the access network device 120. Alternatively, the UPF NE 150 receives user data from the UE 110 via the access network device 120 and forwards the user data to the data network. In addition, the SMF NE 140 manages and controls transmission resources and scheduling functions in the UPF NE 150 for serving the UE 110.

A method for data communication in implementations of the disclosure can be understood as data interaction between a UE and a network device. The network device may be a virtual device and represents the core network. The data interaction is an interaction procedure of session management, which mainly involves interaction between a SMF and the UE.

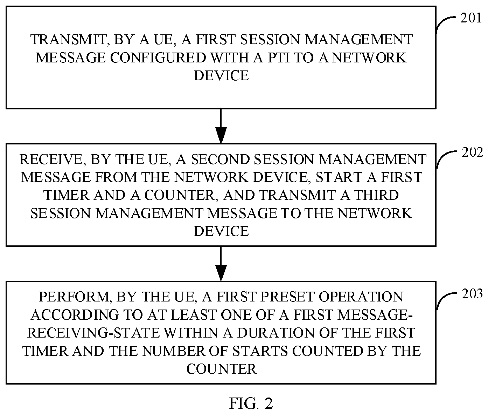

A method for data communication in implementations of the disclosure will be described below with reference to FIG. 2. FIG. 2 is a schematic flowchart of a method for data communication provided in implementations of the disclosure. The method specifically includes the following steps.

Step 201, a UE transmits a first session management message configured with a procedure transaction identity (PTI) to a network device.

The PTI is used to indicate uniqueness of a session management procedure. That is, data transmission of the entire session management procedure will carry the PTI, which indicates that the current session procedure is in progress. The UE will not be described in detail herein, and the network device represents the core network, which will not be additionally explained. The first session management message may be a session management request. The session management request may be a session modification request (PDU SESSION MODIFICATION REQUEST) or a session release request (PDU SESSION RELEASE REQUEST). After being determined as the session modification request or the session release request, the first session management message will remain unchanged during the same session, and subsequent data interaction is also performed correspondingly based on contents of the first session management message.

The PTI is configured for the session procedure when the session management request is transmitted to the network device, thereby ensuring the synchronization between the UE and the network device.

Step 202, the UE receives a second session management message from the network device, starts a first timer and a counter, and transmits a third session management message to the network device.

The counter is used to count the number of starts of the first timer. The second session management message may be a session management command transmitted by the network device to the UE. The session management command may be a session modification command (PDU SESSION MODIFICATION COMMAND) or a session release command (PDU SESSION RELEASE COMMAND). The third session management message may be a session management message fed back by the UE to the network device after the UE accepts the session management command. The session management message may be any one of a session modification complete message (PDU SESSION MODIFICATION COMPLETE), a session modification reject message (PDU SESSION MODIFICATION COMMAND REJECT), or a session release complete message (PDU SESSION RELEASE COMPLETE). It can be understood that, the session modification complete message or the session modification reject message corresponds to a case where the session management command is a session modification command, and the session release complete message corresponds to a case where the session management command is a session release command. The second session management message and the third session management message each carry the PTI. A duration of the first timer can be preset, so that the UE remains synchronized with the network device.

As can be seen, the UE receives the second session management message from the network device, starts the first timer and the counter, and transmits the third session management message to the network device, so that the time length in which the PTI is occupied can be greatly reduced while ensuring the synchronization between the UE and the network device during the session as much as possible.

Step 203, the UE performs a first preset operation according to at least one of a first message-receiving-state within a duration of the first timer and the number of starts counted by the counter.

The first message-receiving-state includes receiving the second session management message again and not receiving the second session management message again. The first preset operation is used to release the PTI. The duration of the first timer is set according to a time interval at which the UE receives the second session management message.

In optional implementations, if the second session management message from the network device is not received again at the UE before the first timer expires, the UE stops the first timer and the counter and releases the PDI upon expiry of the first timer, and the session ends.

In optional implementations, if the second session management message from the network device is received again at the UE before the first timer expires, the UE obtains the number of starts of the first timer currently counted by the counter.

Further, if the number of starts is equal to a preset number threshold, the UE stops the first timer and the counter, transmits the third session management message to the network device, and releases the PTI. In this case, the upper limit of the number of starts is reached, so there is no need to consider whether the third session management message is transmitted successfully, and the PTI can be released directly.

Further, if the number of starts is less than the preset number threshold, the UE restarts the first timer, and transmits the third session management message to the network device again, until the third session management message is transmitted successfully or the number of starts is equal to the preset number threshold. Specifically, when the number of starts is less than the preset number threshold, the first timer is repeatedly restarted, and the third session management message is repeatedly transmitted to the network device, until the third session management message is determined as transmitted successfully or the number of starts is equal to the preset number threshold.

As can be seen, when the third session management message is transmitted successfully, the time length in which the PTI is occupied is at most one timing period of the first timer. When the third session management message fails to be transmitted, the message may be repeatedly transmitted to ensure the synchronization between the UE and the network device as much as possible.

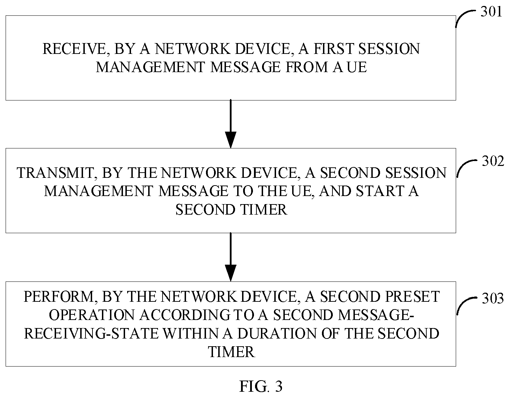

To further illustrate the method for data communication of implementations of the disclosure, another method for data communication of implementations of the disclosure will be described in detail below with reference to FIG. 3. FIG. 3 illustrates another method for data communication provided in implementations of the disclosure. The method specifically includes the following steps.

Step 301, a network device receives a first session management message from a UE.

The first session management message carries a PTI. The PTI is used to indicate uniqueness of a session management procedure.

Step 302, the network device transmits a second session management message to the UE, and starts a second timer.

The second session management message carries the PTI. The second timer is used to determine a moment at which the second session management message is to be retransmitted. It can be understood that, after transmitting the second session management message to the UE, the network device needs to receive a third session management message fed back by the UE to terminate the session. Otherwise, the network device may consider that the UE fails to receive the second session management message, and will transmit the second session management message to the UE again upon the expiry of the second timer. It should be noted that, the maximum number of retransmissions of the network device is equal to a preset number threshold. In this way, the synchronization between the first timer and the second timer can be ensured in an ideal state.

Step 303, the network device performs a second preset operation according to a second message-receiving-state within a duration of the second timer.

The second message-receiving-state includes receiving a third session management message from the UE and not receiving the third session management message from the UE. The third session management message carries the PTI.

Specifically, the network device stops the second timer and terminates the session, when the third session management message from the UE is received at the network device before the second timer expires.

Specifically, when the third session management message from the UE is not received at the network device before the second timer expires, the network device restarts the second timer and retransmits the second session management message to the UE until the number of retransmissions reaches the preset number threshold. Further, the network device stops the second timer and terminates the session, after the number of retransmissions reaches the preset number threshold.

For steps not described in detail above, reference may be made to the description of part or all of the method in FIG. 2, which will not be repeated herein.

As can be seen, with the above method steps, the time length in which the PTI is occupied can be greatly reduced while ensuring the synchronization between the UE and the network device during the session as much as possible.

For ease of understanding, the preset number threshold is set to 4. The method for data communication is illustrated in two cases. The first case relates to a procedure where the number of starts of the first timer reaches 2, and the second case relates to a procedure where the number of starts of the first timer reaches 4.

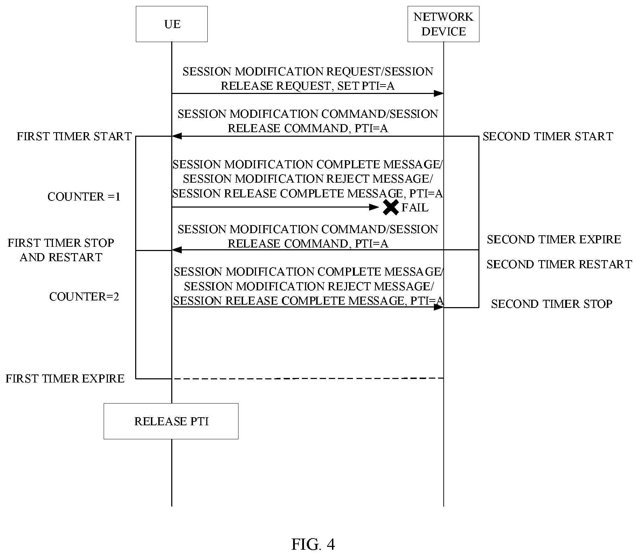

The first case is illustrated below with reference to FIG. 4. FIG. 4 is a schematic flowchart of another method for data communication provided in implementations of the disclosure. The method specifically includes the following steps.

First, a UE transmits a first session management message configured with a PTI to a network device, where the PTI may be denoted as A.

Next, after receiving the first session management message, the network device transmits a second session management message to the UE and starts a second timer.

Next, after receiving the second session management message, the UE transmits a third session management message to the network device and starts a first timer and a counter.

In an ideal state, the duration of the first timer can be equal to the duration of the second timer. In practice, due to factors such as errors, the duration of the first timer can be set to be slightly greater than the duration of the second timer. Specifically, the duration of the second timer may be 16s, and the duration of the first timer may be set to be greater than or equal to 16s. At this time, the value of the counter is 1.

It should be noted that, the transmission of the third session management message fails this time. The network device fails to receive the third session management message. In this case, the network device retransmits the second session management message to the UE and restarts the second timer upon the expiry of the second timer.

After receiving the retransmitted second session management message, the UE restarts the first timer, and transmits the third session management message to the network device again. At this time, the value of the counter is 2.

The transmission succeeds this time. The network device stops the second timer and terminates the session.

The UE releases the PTI after the first timer expires.

It is necessary to wait for expiry of the first timer, because whether the third session management message is transmitted successfully is determined according to whether the second session management message retransmitted by the network device is received.

As can be seen, in this case, the PTI is occupied for at most 16s, which greatly reduces the time length in which the PTI is occupied.

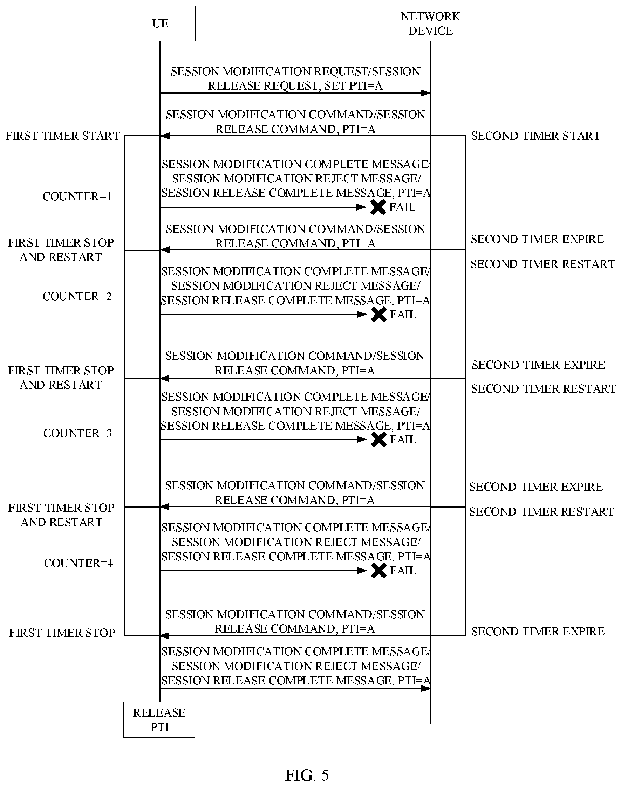

The second case is illustrated below with reference to FIG. 5. FIG. 5 is a schematic flowchart of another method for data communication provided in implementations of the disclosure. The method specifically includes the following steps.

First, a UE transmits a first session management message configured with a PTI to a network device.

Next, the network device transmits a second session management message to the UE and starts a second timer.

Next, the UE transmits a third session management message to the network device and starts a first timer and a counter. At this time, the value of the counter is 1.

The transmission of the third session management message fails this time. The network device fails to receive the third session management message. In this case, upon the first expiry of the second timer, the network device retransmits the second session management message to the UE for the first time and restarts the second timer.

Next, the UE restarts the first timer, and transmits the third session management message to the network device again. At this time, the value of the counter is 2.

The transmission of the third session management message fails this time. The network device fails to receive the third session management message. In this case, upon the second expiry of the second timer, the network device retransmits the second session management message to the UE for the second time and restarts the second timer.

Next, the UE restarts the first timer, and transmits the third session management message to the network device again. At this time, the value of the counter is 3.

The transmission of the third session management message fails this time. The network device fails to receive the third session management message. In this case, upon the third expiry of the second timer, the network device retransmits the second session management message to the UE for the third time and restarts the second timer.

Next, the UE restarts the first timer, and transmits the third session management message to the network device again. At this time, the value of the counter is 4.

The transmission of the third session management message fails this time. The network device fails to receive the third session management message. In this case, upon the fourth expiry of the second timer, the network device retransmits the second session management message to the UE for the fourth time, stops the second timer, and terminate the session.

Finally, the value of the counter is 4 at this time and reaches the preset number threshold. Therefore, the UE stops the first timer, transmits the third session management message to the network device again, and releases the PTI.

As can be seen, in this way, the synchronization between the UE and the network device can be ensured during the session management procedure as much as possible.

For ease of understanding, the time axis is illustrated below.

The start time of the second timer: when the network device transmits the second session management message.

The start time of the first timer: when the UE receives the second session management message, where the delay is ignored in an ideal state, and the first timer can be considered to be started synchronously with the second timer.

The network device retransmits the second session management message to the UE upon the expiry of the second timer.

The UE restarts the first timer upon receiving the retransmitted second session management message, and the value of the counter is incremented by 1.

FIGs. 4 and 5 illustrates an ideal state where the delay is ignored. In the ideal state, the start and the stop of the identification timer are respectively synchronized with the start and the stop of the retransmission timer.

As can be seen, in the method for data communication and related apparatuses, the UE transmits the first session management message configured with the PTI to the network device, where the PTI is used to indicate uniqueness of the session management procedure. Then, the UE receives the second session management message from the network device, starts the first timer and the counter, and transmits the third session management message to the network device, where the second session management message and the third session management message each carry the PTI, the first timer is used to determine a moment at which the third session management message is to be retransmitted, and the counter is used to count the number of starts of the first timer. Finally, the UE performs the first preset operation according to at least one of the first message-receiving-state within the duration of the first timer and the number of starts counted by the counter, where the first message-receiving-state includes receiving the second session management message again and not receiving the second session management message again, the first preset operation is used to release the PTI, and the duration of the first timer is set according to the time interval at which the UE receives the second session management message. In this way, the time length in which the PTI is occupied can be greatly reduced while ensuring the synchronization between the UE and the network device during the session as much as possible.

The technical solutions of implementations of the disclosure have been elaborated above from the perspective of interaction between various NEs on method side. It can be understood that, in order to implement the above functions, the UE, the access network device, and the core network NE include hardware structures and/or software modules for performing respective functions. Those of ordinary skill in the art will appreciate that units and algorithmic operations of various examples described in connection with implementations of the disclosure can be implemented by hardware or by a combination of hardware and computer software. Whether these functions are performed by means of hardware or hardware driven by computer software depends on the particular application and the design constraints of the associated technical solution. Those skilled in the art may use different methods with regard to each particular application to implement the described functionality, but such methods should not be regarded as lying beyond the scope of the disclosure.

Division of functional units of the UE, the access network device, and the core network NE may be implemented according to the above method implementations in implementations of the disclosure. For example, various functional units may be divided to be in one-to-one correspondence with each function, or two or more functions may be integrated into one processing unit. The integrated unit may be implemented in the form of hardware, or may be implemented in the form of software program module. It is to be noted that, division of units in implementations of the disclosure is illustrative and is only a division of logical functions, and there may exist other manners of division in practice.

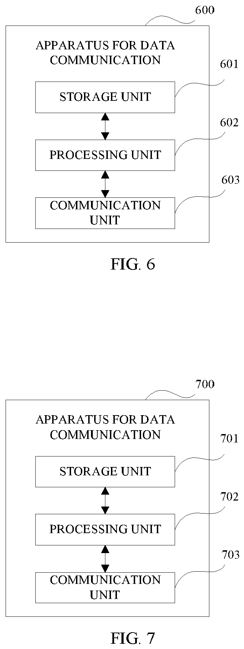

In the case of using the integrated unit, FIG. 6 illustrates a block diagram of functional units of an apparatus for data communication. The apparatus for data communication 600 is applied to a UE and specifically includes a processing unit 602 and a communication unit 603. The processing unit 602 is configured to control and manage operations of the UE. For example, the processing unit 602 is configured to support the UE to perform the steps in FIG. 2 and other procedures for technologies described herein. The communication unit 603 is configured to support communication between the UE and the network device. The UE may also include a storage unit 601 configured to store program codes and data of the UE.

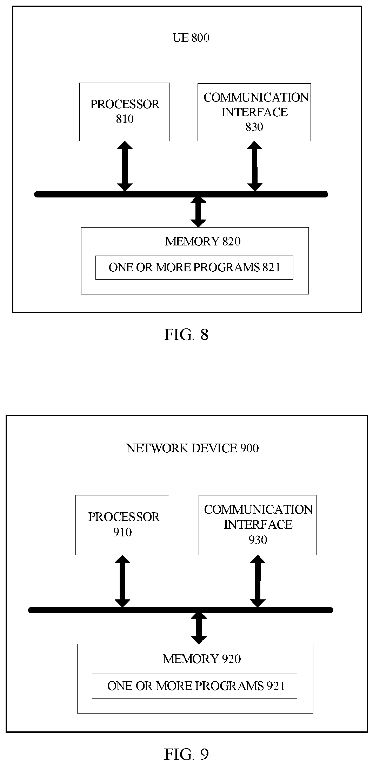

The processing unit 602 may be a processor or a controller and may be, for example, a central processing unit (CPU), a general-purpose processor, a digital signal processor (DSP), an application-specific integrated circuit (ASIC), a field programmable gate array (FPGA), or other programmable logic devices, transistor logic devices, hardware components, or a combination thereof. Various exemplary logic blocks, modules, and circuits disclosed in implementations of the disclosure can be implemented or executed. The processing unit 602 may also be a combination for implementing computing functions, for example, one or more microprocessors, a combination of DSP and microprocessor, or the like. The communication unit 603 may be a communication interface, a transceiver, a transceiver circuit, etc. The storage unit 601 may be a memory. When the processing unit 602 is a processor, the communication unit 603 is a communication interface, and the storage unit 601 is a memory, the apparatus for data communication 600 involved in implementations of the disclosure may be the UE illustrated in FIG. 8.

In specific implementation, the processing unit 602 is configured to perform any operation performed by the UE in above method implementations, and when data transmission such as transmitting is performed, the communication unit 603 may be selectively invoked to complete corresponding operations, which will be described in detail below.

The processing unit 602 is configured to: transmit, with the communication unit 603, a first session management message configured with a PTI to a network device, receive, with the communication unit 603, a second session management message from the network device, start a first timer and a counter, and transmit a third session management message to the network device, where the second session management message and the third session management message each carry the PTI, and the counter is used to count the number of starts of the first timer, and perform a first preset operation according to at least one of a first message-receiving-state within a duration of the first timer and the number of starts counted by the counter, the first message-receiving-state includes receiving the second session management message again and not receiving the second session management message again, the first preset operation is used to release the PTI, and the duration of the first timer is set according to a time interval at which the UE receives the second session management message.

In this way, the time length in which the PTI is occupied can be greatly reduced while ensuring the synchronization between the UE and the network device during the session as much as possible.

In the case of using the integrated unit, FIG. 7 illustrates a block diagram of functional units of an apparatus for data communication. The apparatus for data communication 700 is applied to a network device and specifically includes a processing unit 702 and a communication unit 703. The processing unit 702 is configured to control and manage operations of the network device. For example, the processing unit 702 is configured to support the network device to perform the steps in FIG. 3 and other procedures for technologies described herein. The communication unit 703 is configured to support communication between the UE and the network device. The network device may also include a storage unit 701 configured to store program codes and data of the network device.

The processing unit 702 may be a processor or a controller and may be, for example, a CPU, a general-purpose processor, a DSP, an ASIC, a FPGA, or other programmable logic devices, transistor logic devices, hardware components, or a combination thereof. Various exemplary logic blocks, modules, and circuits disclosed in implementations of the disclosure can be implemented or executed. The processing unit 702 may also be a combination for implementing computing functions, for example, one or more microprocessors, a combination of DSP and microprocessor, or the like. The communication unit 703 may be a communication interface, a transceiver, a transceiver circuit, etc. The storage unit 701 may be a memory. When the processing unit 702 is a processor, the communication unit 703 is a communication interface, and the storage unit 701 is a memory, the apparatus for data communication 700 involved in implementations of the disclosure may be the network device illustrated in FIG. 9.

In specific implementation, the processing unit 702 is configured to perform any operation performed by the network device in above method implementations, and when data transmission such as transmitting is performed, the communication unit 703 may be selectively invoked to complete corresponding operations, which will be described in detail below.

The processing unit 702 is configured to: receive, with the communication unit 703, a first session management message from a UE, where the first session management message carries a PTI, transmit, with the communication unit 703, a second session management message to the UE, and start a second timer, where the second session management message carries the PTI, and perform a second preset operation according to a second message-receiving-state within a duration of the second timer, where the second message-receiving-state includes receiving a third session management message from the UE and not receiving the third session management message from the UE, and the third session management message carries the PTI.

In this way, the time length in which the PTI is occupied can be greatly reduced while ensuring the synchronization between the UE and the network device during the session as much as possible.

Referring to FIG. 8, FIG. 8 is a schematic structural diagram of a UE 800 provided in implementations of the disclosure. The UE 800 includes a processor 810, a memory 820, a communication interface 830, and at least one communication bus for connecting the processor 810, the memory 820, and the communication interface 830.

The memory 820 includes, but is not limited to, a random access memory (RAM), a read-only memory (ROM), an erasable programmable read only memory (EPROM), or a compact disc ROM (CD-ROM). The memory 820 is used for related instructions and data.

The communication interface 830 is configured to receive and transmit data.

The processor 810 may be one or more CPUs. In the case where the processor 810 is one CPU, the CPU may be a single-core CPU or a multi-core CPU.

It should be noted that, the processor 810 in the UE 800 is configured to read one or more programs 821 stored in the memory 820 to perform the method in method implementations illustrated in FIG. 2. The UE 800 may also be configured to perform the method on UE side of above method implementations of the disclosure, which will not be repeated herein.

Referring to FIG. 9, FIG. 9 is a schematic structural diagram of a network device 900 provided in implementations of the disclosure. The network device 900 includes a processor 910, a memory 920, a communication interface 930, and at least one communication bus for connecting the processor 910, the memory 920, and the communication interface 930.

The memory 920 includes, but is not limited to, a RAM, a ROM, an EPROM, or a CD-ROM. The memory 920 is used for related instructions and data.

The communication interface 930 is configured to receive and transmit data.

The processor 910 may be one or more CPUs. In the case where the processor 910 is one CPU, the CPU may be a single-core CPU or a multi-core CPU.

It should be noted that, the processor 910 in the network device 900 is configured to read one or more programs 921 stored in the memory 920 to perform the method in method implementations illustrated in FIG. 3. The network device 900 may also be configured to perform the method on network device side of above method implementations of the disclosure, which will not be repeated herein.

Implementations of the disclosure also provides a computer-readable storage medium. The computer-readable storage medium is configured to store computer programs for electronic data interchange. The computer programs are operable with a computer to perform some or all of the steps described for the UE, the access network device, and the AMF NE, or the SMF NE in above method implementations.

Implementations of the disclosure further provides a computer program product. The computer program product includes computer programs. The computer programs are operable with a computer to perform some or all of the steps described for the UE, the access network device, and the AMF NE, or the SMF NE in above method implementations. The computer program product may be a software installation package.

The steps of the method or algorithm described in implementations of the disclosure may be implemented by means of hardware, or may be implemented by executing software instructions by a processor. The software instructions can be implemented by corresponding software modules, which can be stored in a RAM, a flash memory, a ROM, an EPROM, an electrically EPROM (EEPROM), a register, a hard disk, a mobile hard disk, a CD-ROM, or any other form of storage medium known in the art. An exemplary storage medium is coupled to the processor, so that the processor can read information from the storage medium and write information to the storage medium. The storage medium can also be a component of the processor. The processor and the storage medium may be located in an ASIC. In addition, the ASIC can be located in an access network device, a network device, or a core network gateway. Of course, the processor and the storage medium may also be present as discrete components in the access network device, the network device, or the core network gateway.

Those skilled in the art will appreciate that, all or part of functions described in one or more of the foregoing implementations can be implemented through software, hardware, firmware, or any other combination thereof. When implemented by software, all or part of the functions can be implemented in the form of a computer program product. The computer program product includes one or more computer instructions. When the computer instructions are applied and executed on a computer, all or part of the operations or functions of the implementations of the disclosure are performed. The computer can be a general-purpose computer, a special-purpose computer, a computer network, or other programmable apparatuses. The computer instruction can be stored in a computer readable storage medium, or transmitted from one computer readable storage medium to another computer readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

The purposes, technical solutions, and beneficial effects of implementations of the disclosure are described in detail in detailed description. It should be understood that, the above only illustrates specific implementation manners of implementations of the disclosure, and is not intended for limiting the scope of implementations of the disclosure. Any modifications, equivalent replacements, improvements, and the like made on the basis of the technical solutions of implementations of the disclosure should fall within the scope of implementations of the disclosure.

## Claims

1. A method for data communication, comprising:
transmitting, by user equipment (UE), a first session management message configured with a procedure transaction identity (PTI) to a network device;
receiving, by the UE, a second session management message from the network device, starting a first timer and a counter, and transmitting a third session management message to the network device, the second session management message and the third session management message each carrying the PTI, and the counter being used to count the number of starts of the first timer; and
performing, by the UE, a first preset operation according to at least one of a first message-receiving-state within a duration of the first timer and the number of starts counted by the counter, the first message-receiving-state comprising receiving the second session management message again and not receiving the second session management message again, the first preset operation being used to release the PTI, and the duration of the first timer being set according to a time interval at which the UE receives the second session management message.

2. The method of claim 1, wherein the duration of the first timer is greater than or equal to a time interval between an n-th reception of the second session management message by the UE and a (n+1)-th reception of the second session management message by the UE, and is less than a time interval between the n-th reception of the second session management message by the UE and a (n+2)-th reception of the second session management message by the UE, wherein n is a positive integer.

3. The method of claim 1, wherein performing, by the UE, the first preset operation according to at least one of the first message-receiving-state within the duration of the first timer and the number of starts counted by the counter comprises:
releasing, by the UE, the PTI when the second session management message is not received again at the UE before the first timer expires.

4. The method of claim 1, wherein performing, by the UE, the first preset operation according to at least one of the first message-receiving-state within the duration of the first timer and the number of starts counted by the counter comprises:
obtaining, by the UE, the number of starts of the first timer currently counted by the counter, when the second session management message is received again at the UE before the first timer expires; and
transmitting, by the UE, the third session management message to the network device and releasing the PTI, when the number of starts is equal to a preset number threshold.

5. The method of claim 4, wherein after obtaining, by the UE, the number of starts of the first timer currently counted by the counter, the method further comprises:
restarting, by the UE, the first timer, and transmitting the third session management message to the network device, when the number of starts is less than the preset number threshold.

6. The method of any of claims 1 to 5, wherein
the first session management message comprises a session modification request (PDU SESSION MODIFICATION REQUEST) or a session release request (PDU SESSION RELEASE REQUEST);
the second session management message comprises a session modification command (PDU SESSION MODIFICATION COMMAND) or a session release command (PDU SESSION RELEASE COMMAND); and
the third session management message comprises any one of a session modification complete message (PDU SESSION MODIFICATION COMPLETE), a session modification reject message (PDU SESSION MODIFICATION COMMAND REJECT), or a session release complete message (PDU SESSION RELEASE COMPLETE).

7. A method for data communication, comprising:
receiving, by a network device, a first session management message from user equipment (UE), the first session management message carrying a procedure transaction identity (PTI);
transmitting, by the network device, a second session management message to the UE, and starting a second timer, the second session management message carrying the PTI; and
performing, by the network device, a second preset operation according to a second message-receiving-state within a duration of the second timer, the second preset operation being used to terminate a session, the second message-receiving-state comprising receiving a third session management message from the UE and not receiving the third session management message from the UE, and the third session management message carrying the PTI.

8. The method of claim 7, wherein performing, by the network device, the second preset operation according to the message-receiving-state within the duration of the second timer comprises:
terminating, by the network device, the session when the third session management message from the UE is received at the network device before the second timer expires.

9. The method of claim 7, wherein performing, by the network device, the second preset operation according to the second message-receiving-state within the duration of the second timer comprises:
restarting, by the network device, the second timer and retransmitting the second session management message to the UE, when the third session management message from the UE is not received at the network device before the second timer expires.

10. The method of claim 9, wherein after restarting, by the network device, the second timer and retransmitting the second session management message to the UE, when the third session management message from the UE is not received at the network device before the second timer expires, the method further comprises:
stopping, by the network device, the second timer and terminating the session, after the number of retransmissions reaches a preset number threshold.

11. An apparatus for data communication, being applied to user equipment (UE) and comprising:
a communication unit; and
a processing unit configured to:
transmit, with the communication unit, a first session management message configured with a procedure transaction identity (PTI) to a network device;
receive, with the communication unit, a second session management message from the network device, start a first timer and a counter, and transmit a third session management message to the network device, the second session management message and the third session management message each carrying the PTI, and the counter being used to count the number of starts of the first timer; and
perform a first preset operation according to at least one of a first message-receiving-state within a duration of the first timer and the number of starts counted by the counter, the first message-receiving-state comprising receiving the second session management message again and not receiving the second session management message again, the first preset operation being used to release the PTI, and the duration of the first timer being set according to a time interval at which the UE receives the second session management message.

12. The apparatus of claim 11, wherein the duration of the first timer is greater than or equal to a time interval between an n-th reception of the second session management message by the UE and a (n+1)-th reception of the second session management message by the UE, and is less than a time interval between the n-th reception of the second session management message by the UE and a (n+2)-th reception of the second session management message by the UE, wherein n is a positive integer.

13. The apparatus of claim 11, wherein in terms of performing the first preset operation according to at least one of the first message-receiving-state within the duration of the first timer and the number of starts counted by the counter, the processing unit is specifically configured to:
release the PTI when the second session management message is not received again before the first timer expires.

14. The apparatus of claim 11, wherein in terms of performing the first preset operation according to at least one of the first message-receiving-state within the duration of the first timer and the number of starts counted by the counter, the processing unit is specifically configured to:
obtain the number of starts of the first timer currently counted by the counter, when the second session management message is received again before the first timer expires; and
transmit the third session management message to the network device and release the PTI, when the number of starts is equal to a preset number threshold.

15. The apparatus of claim 14, wherein after obtaining the number of starts of the first timer currently counted by the counter, the processing unit is further configured to:
restart the first timer, and transmit the third session management message to the network device, when the number of starts is less than the preset number threshold.

16. The apparatus of any of claims 11 to 15, wherein
the first session management message comprises a session modification request (PDU SESSION MODIFICATION REQUEST) or a session release request (PDU SESSION RELEASE REQUEST);
the second session management message comprises a session modification command (PDU SESSION MODIFICATION COMMAND) or a session release command (PDU SESSION RELEASE COMMAND); and
the third session management message comprises any one of a session modification complete message (PDU SESSION MODIFICATION COMPLETE), a session modification reject message (PDU SESSION MODIFICATION COMMAND REJECT), or a session release complete message (PDU SESSION RELEASE COMPLETE).

17. An apparatus for data communication, being applied to a network device and comprising:
a communication unit; and
a processing unit configured to:
receive, with the communication unit, a first session management message from user equipment (UE), the first session management message carrying a procedure transaction identity (PTI);
transmit, with the communication unit, a second session management message to the UE, and start a second timer, the second session management message carrying the PTI; and
perform a second preset operation according to a second message-receiving-state within a duration of the second timer, the second preset operation being used to terminate a session, the second message-receiving-state comprising receiving a third session management message from the UE and not receiving the third session management message from the UE, and the third session management message carrying the PTI.

18. A user equipment (UE), comprising an application processor and a memory configured to store one or more programs, the one or more programs being configured to be executed by the application processor and comprising instructions configured to perform the method of any of claims 1 to 6.

19. A network device, comprising an application processor and a memory configured to store one or more programs, the one or more programs being configured to be executed by the application processor and comprising instructions configured to perform the method of any of claims 7 to 10.

20. A computer storage medium storing computer programs, the computer program comprising program instructions which when executed by a processor, cause the processor to perform the method of any of claims 1 to 6 or 7 to 10.
